# DEMANDE DE BREVET EUROPEEN

(11) **EP 1 741 407 A1**
(43) Date de publication de la demande: **10.01.2007**
(21) Numéro de dépôt: 05291465.2
(22) Date de dépôt: 06.07.2005
(51) Int. Cl.: A61C 19/06, A61Q 11/00

(54) **Dispositif lumineux pour le blanchiment des dents et procédé de blanchiment des dents associé**

(71) Demandeur: TD Innovation, 75017 Paris (FR)
(72) Inventeur: Meunier, Michel, 91390 Morsang sur Orge (FR); Didier, Thibaut, 75007 Paris (FR)
(74) Mandataire: Thinat, Michel

(57) **Abrégé**

L'invention concerne principalement un dispositif pour le blanchiment des dents caractérisé en ce qu'il comprend une source lumineuse (24) à laquelle est fixée une pièce (14) qui assure le maintien de la source lumineuse (24) dans une position permettant l'illumination des dents par l'application d'une force de serrage des mâchoires de l'utilisateur sur la dite pièce de maintien (14) pendant la durée du traitement.

L'invention concerne en outre un procédé de blanchiment des dents comprenant au moins les étapes suivantes :
a) application d'un gel contenant un agent actif réagissant à la lumière sur les dents à blanchir (29,30), et
b) illumination des dites dents (29,30) avec le dispositif de l'invention.

## Description

La présente invention concerne principalement un dispositif lumineux pour le blanchiment des dents.

L'invention concerne également un procédé de blanchiment des dents utilisant un tel dispositif.

Des procédés de blanchiment des dents connus utilisent l'association d'une source lumineuse et de peroxyde d'hydrogène contenu dans un gel appliqué sur les dents à blanchir, cette association particulière conduisant à une augmentation de la réactivité du peroxyde d'hydrogène qui oxyde les pigments présents dans l'émail et blanchit les dents par voie de conséquence.

D'après la littérature sur le sujet, l'efficacité d'un tel traitement provient d'une excitation photonique résultant de l'application d'une lumière de longueur d'onde comprise entre 380 et 520 nanomètres sur le peroxyde d'hydrogène et les dents avec lesquelles il est en contact.

Il est à noter que cette excitation du peroxyde d'hydrogène peut également être obtenue par simple application du gel sur les dents à blanchir, l'humidité et la chaleur ambiante de la bouche permettant de faire agir le peroxyde d'hydrogène mais en des temps nettement plus longs que lors de l'utilisation d'une source lumineuse.

Dans les dispositifs lumineux de blanchiment des dents connus, un écarteur est introduit dans la bouche de l'utilisateur de manière à maintenir apparentes les dents à blanchir pendant toute la durée du traitement et est maintenu dans cette position durant toute la durée du traitement, soit pendant environ 45 minutes.

Les dents sont alors recouvertes d'un gel contenant du peroxyde d'hydrogène et une source lumineuse vient éclairer les dents apparentes afin d'activer le peroxyde d'hydrogène et d'obtenir l'effet de blanchiment.

Les dispositifs lumineux utilisés présentent généralement une tête flexible qui comporte des diodes électroluminescentes disposées sur une surface concave en direction des dents et qui est reliée par l'intermédiaire d'un bras souple renfermant des fibres optiques à l'alimentation.

Cependant, ces dispositifs sont volumineux, lourds et bien que souvent montés sur des roulettes, difficiles d'utilisation.

De plus, le positionnement des diodes par rapport aux dents à blanchir est approximatif, la qualité du blanchiment pouvant s'en faire ressentir.

Enfin, l'utilisateur doit utiliser des lunettes de protection en raison de l'intensité des rayonnements intempestifs vers le visage et les yeux.

Le dispositif de l'invention permet de pallier les inconvénients précités et est essentiellement caractérisé en ce que qu'il comprend une source lumineuse 24 à laquelle est fixée une pièce 14 qui assure le maintien de la dite source lumineuse 24 dans une position permettant l'illumination des dents par l'application d'une force de serrage des mâchoires de l'utilisateur sur la dite pièce de maintien 14 pendant la durée du traitement.

De préférence, le dispositif comporte en outre un élément de maintien apparent des dents 1 pendant la durée du traitement tel qu'une gouttière 1 faite en un matériau plastique souple translucide ou transparent.

Dans le cas de l'utilisation d'une gouttière 1, cette dernière peut être faite en un matériau thermoformable de façon à épouser la forme des arcades supérieure et inférieure de l'utilisateur.

Avantageusement, l'élément de maintien de la source lumineuse 14 est une plaque rigide 14.

Il peut être prévu que l'élément de maintien de la source lumineuse 14 soit amoviblement ou inamoviblement fixé à la source lumineuse 24.

Il peut également être prévu que la pièce de maintien de la source lumineuse 14 soit inamoviblement fixée à l'élément de maintien apparent des dents 1.

De préférence, la pièce de maintien 14 comporte des moyens de blocage 15,16 aidant au positionnement fixe et reproductible de ladite pièce de maintien 14 pendant la durée du traitement.

De façon avantageuse, la source lumineuse 24 comprend une pluralité de diodes électroluminescentes 24,24a,24b disposées au niveau d'une surface concave 22 en direction des dents.

Préférentiellement, le dispositif de l'invention comprend une pluralités de diodes supérieures 24a destinées à illuminer l'arcade supérieure et une pluralités de diodes inférieures 24b destinées à illuminer l'arcade inférieure.

Selon un aspect de l'invention, le dispositif comporte un groupe de dix diodes supérieures 24a et un groupe de dix diodes inférieures 24b, chaque groupe de dix diodes 24a,24b étant divisé en deux groupes de cinq diodes, quatre circuits intégrés pilotant le courant circulant dans chacun des groupes de cinq diodes ainsi qu'un accumulateur 25 ou une pile 25 qui alimente la pluralité de diodes 24,24a,24b.

Selon un mode de réalisation avantageux de l'invention, au moins la pluralité de diodes 24,24a,24b est disposée dans un boîtier 21 et au moins l'accumulateur 25 ou la pile 25 est disposé en dehors du boîtier 21 et relié à ce dernier par un cordon d'alimentation 27.

De façon préférentielle, le faisceau lumineux issu de la source lumineuse 24 présente un spectre de longueur d'ondes comprise entre 380 et 520 nanomètres.

L'invention concerne également un procédé de blanchiment des dents comprenant au moins les étapes suivantes :
a) application d'un gel contenant un agent actif réagissant à la lumière sur les dents à blanchir 29,30, et
b) illumination des dites dents 29,30 avec le dispositif décrit précédemment.

Avantageusement, le gel comprend du peroxyde de carbamide.

Très avantageusement, le gel comprend du dioxyde de titane.

De préférence, la source lumineuse 24 du dispositif de l'invention est disposée à environ 0,5 cm des dents à blanchir 29,30 pendant la durée du traitement.

Enfin, il peut être prévu que le gel soit régulièrement appliqué sur les dents pendant le traitement.

L'invention sera mieux comprise et d'autres buts, avantages et caractéristiques de celle-ci apparaîtront plus clairement à la lecture de la description qui suit et qui est faite au regard des dessins annexés qui représentent des exemples non limitatifs de réalisation du dispositif de l'invention et sur lesquels :
- la figure 1 est une vue en perspective de la gouttière et de la plaque de maintien du dispositif lumineux selon un premier mode de réalisation ;
- la figure 2 est une vue en perspective de la gouttière et de la plaque de maintien du dispositif lumineux selon un second mode de réalisation ;
- la figure 3 est une vue de dessus de la gouttière et de la plaque de maintien en position de fonctionnement selon l'un ou l'autre des premier et second mode de réalisation ;
- la figure 4 est une vue en perspective du dispositif de l'invention selon une première variante ;
- la figure 5 est une vue de coté du dispositif de la figure 4 ;
- la figure 6 est une vue de dessus en coupe du dispositif de la figure 4 ;
- la figure 7 est une vue de coté du dispositif de l'invention selon une deuxième variante ;
- la figure 8 est une vue de dessus en coupe du dispositif de la figure 7 ;
- la figure 9 est une vue en perspective du dispositif de l'invention selon une troisième variante ;
- la figure 10 est une vue schématique de coté en coupe du dispositif de l'invention représenté en fonctionnement dans la bouche de l'utilisateur ; et
- la figure 11 est une vue du schéma du circuit électrique.

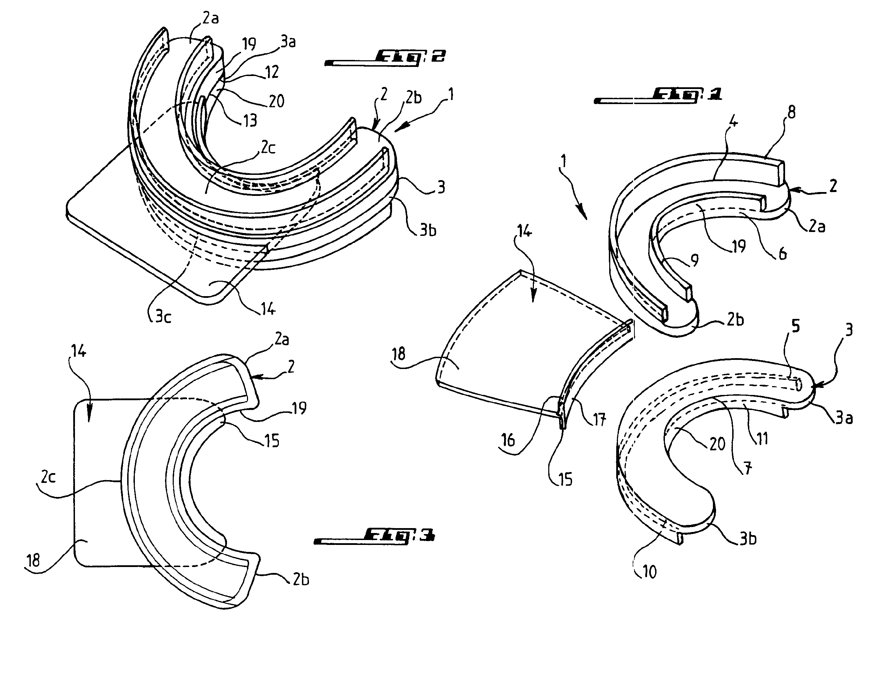

En référence à la figure 1, selon un premier mode de réalisation, la gouttière 1 est de type connu et comporte une partie supérieure 2 et une partie inférieure 3 destinées à venir se positionner respectivement au niveau des arcades supérieure et inférieure de l'utilisateur de façon que la face avant des dents des deux arcades soit isolée jusqu'aux gencives de l'extérieure de la bouche par le matériau constituant cette gouttière 1.

A cet effet, chaque partie 2,3 de la gouttière 1 est en forme de U correspondant à la concavité de chaque arcade et comporte au niveau de chacun de ces bords avant 4,5 et arrière 6,7 un rebord respectif 8,10,9,11 les rebords avant 8,10 étant destinés à être approximativement plaqués contre la face avant des dents de l'utilisateur et les rebords arrière 9,11, de hauteur inférieure à la hauteur des rebords avants 8,10, étant destinés à être approximativement plaqués contre la face arrière des dents de l'utilisateur, ces rebords avant 8,10 et arrière 9,11 assurant notamment le maintien de la gouttière 1 sur les arcades respectives par effet d'adhésion.

La gouttière 1 est faite en un matériau plastique souple et il peut être prévu qu'elle soit faite en un matériau thermoformable de façon à s'adapter spécifiquement à la dentition et à la morphologie des arcades de l'utilisateur.

Le dispositif de l'invention comprend également une plaque rigide 14, dont la fonctionnalité sera expliquée plus loin, qui est de forme approximativement rectangulaire et qui est destinée à venir en prise entre les parties supérieure 2 et inférieure 3 de la gouttière 1 en étant maintenu bloqué dans cette position par l'application d'une force de serrage des mâchoires supérieure et inférieure revêtues de cette gouttière 1 sur cette plaque 14.

Pour assurer le positionnement de la plaque 14 relativement à la gouttière 1, la plaque 14 comporte au niveau de son bord arrière 15 disposé dans la bouche de l'utilisateur des rebords respectivement supérieur 16 et inférieur 17.

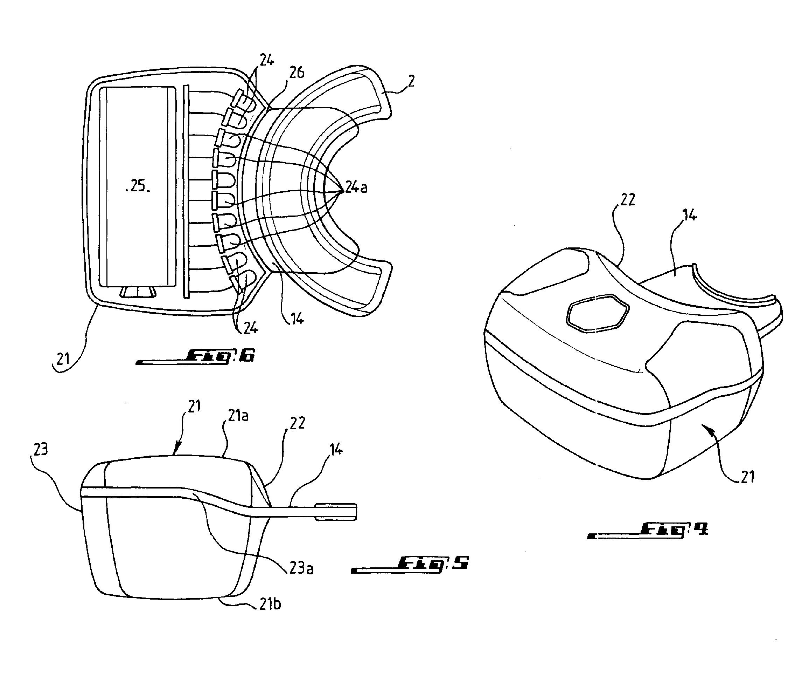

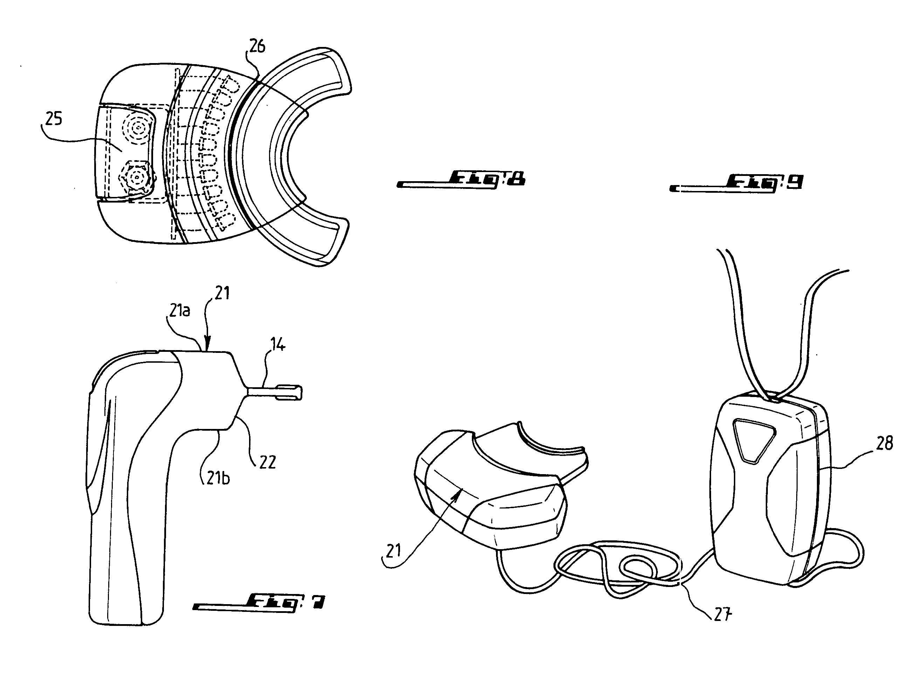

De cette façon, comme représenté sur la figure 3, la partie avant 18 de la plaque 14 reste à l'extérieur de la bouche tandis que les rebords supérieur 16 et inférieur 17 viennent en appui contre les faces arrières respectives 19,20 des rebords arrières 9,11 des parties supérieure 2 et inférieure 3 de la gouttière 1.

Ainsi, la plaque 14 est maintenue approximativement en position horizontale par l'utilisateur pendant la durée du traitement tant qu'il exerce un effort de serrage des mâchoires inférieures et supérieures sur la plaque 14.

La gouttière 1 représentée sur la figure 1 est faite des deux parties supérieure 2 et inférieure 3 séparées et indépendante entre lesquelles la plaque 14 vient en prise lorsque l'utilisateur exerce un effort de serrage des mâchoires.

En référence à la figure 2, il peut être avantageux de prévoir que les parties supérieure 2 et inférieure 3 soient fixées l'une à l'autre par collage au niveau de leurs extrémités libres respectives 2a,2b ; 3a,3b, leurs parties centrales respectives 2c,3c n'étant pas collées afin de permettre l'insertion de la pièce de maintien 14 entre ces parties supérieure 2 et inférieure 3 et son retrait après utilisation.

Il peut également être prévu que la pièce de maintien 14 soit inamoviblement fixée à la gouttière 1 par collage de cette plaque 14 dans la position décrite précédemment sur la face inférieure 12 de la partie centrale 2c, de la partie supérieure 2 de la gouttière et sur la face supérieure 13 de la partie centrale 3c de la partie inférieure 3 de la gouttière 1.

Dans ce dernier cas, la gouttière 1 et la pièce de maintien 14 forment une pièce unique, contrairement aux deux variantes de réalisation précédentes pour lesquelles la pièce de maintien 14 est amovible par rapport à la gouttière 1, elle-même constituée de deux parties supérieure 2 et inférieur 3 qui sont soit séparées soit liées au niveau de leurs extrémités libres respectives 2a,2b ; 3a,3b.

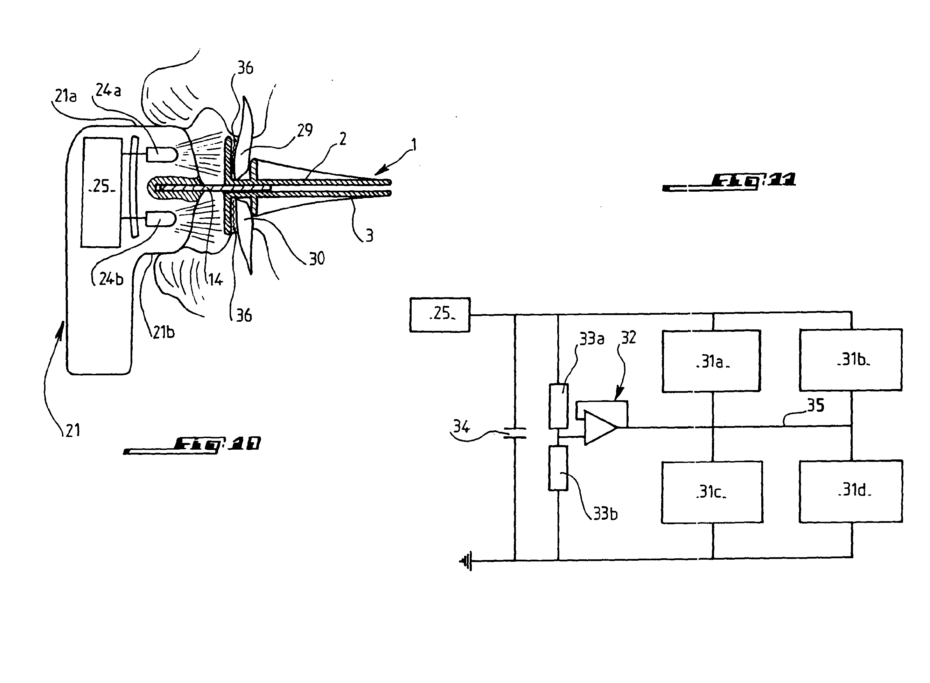

La source lumineuse représentée sur les figures 4 à 6 comporte un boîtier 21 sensiblement parallélépipédique qui renferme la source lumineuse et sur la face avant 22 duquel est fixée de façon approximativement perpen-diculaire la plaque 14 décrite précédemment.

Dans cette première variante de réalisation, la plaque 14 s'étend depuis la face avant 22 jusqu'à la face arrière 23 du boîtier 21 en formant un plan de joint 23a délimitant le plan d'ouverture et de fermeture du boîtier 21.

Le boîtier 21 est réalisé en un matériau plastique et renferme principalement une pluralités de diodes 24 alimentées par une pile 25 également contenue dans ce boîtier 21.

La pluralité de diodes 24 est disposée derrière un support 26 en plastique transparent à la longueur d'onde émise par la lampe, au niveau de la face avant 22 convexe dans la direction des dents du boîtier 21 de façon que le faisceau lumineux soit dirigé vers les dents.

Ainsi, lorsque l'utilisateur exerce un effort de serrage des arcades supérieure et inférieure revêtues de la gouttière 1 sur la plaque 14, les dents de l'utilisateur se trouvent exposées au faisceau lumineux émis par les diodes 24, la gouttière 1 étant à cet effet faite d'un matériau plastique souple translucide ou transparent.

La description du schéma électrique et du positionnement des diodes 24 dans le boîtier 21 sera faite plus loin.

Dans la deuxième variante représentée sur les figures 7 et 8, la plaque 14 est fixée sur la face avant 22 du boîtier 21 par collage et la géométrie du boîtier 15 est telle que la pile 25 s'étend dans ce boîtier 15 verticalement en étant perpendiculaire à la plaque 14.

En référence à la figure 9, il peut être avantageux, pour limiter le poids du boîtier 21 maintenu par l'effort de serrage exercé par l'utilisateur, de prévoir que la pile 25 soit disposée en dehors de ce boîtier 21 dans un compartiment 28 relié au boîtier 21 par un cordon d'alimentation 27, ce compartiment 28 pouvant être par exemple porté autour du coup de l'utilisateur pendant la durée du traitement.

Par ailleurs, il peut être prévu que la plaque 14 soit amoviblement fixée au boîtier 21 par des moyens appropriés connus, ce qui permet de distinguer les pièces à usage unique ou à usage personnalisé, à savoir la gouttière 1 et la plaque 14, du boîtier 21 utilisable par des utilisateurs différents par exemple.

En référence aux figures 6 et 10, les diodes 24 sont réparties en un groupe supérieur de dix diodes 24a et un groupe inférieur de dix diodes 24b, chaque groupe étant réparti de part et d'autre de la plaque 14 de façon que le groupe supérieur de diodes 24a illumine spécifiquement les dents 29 de la mâchoire supérieure tandis que la groupe inférieur de diodes 24b illumine spécifiquement les dents 30 de la mâchoire inférieure.

Les diodes 24a,24b de chaque groupe supérieur et inférieur sont réparties sur un même plan derrière le support 26 en suivant la convexité de la face avant 22 du boîtier 21.

Concernant le dispositif électrique schématisé sur la figure 11, chaque groupe supérieur 24a et inférieur 24b de dix diodes est divisé en deux groupes de cinq diodes en série dans chacun desquels le courant qui circule est piloté par un circuit intégré formant convertisseur de puissance.

Ainsi, le dispositif électrique comprend principalement quatre entités 31a,31b,31c,31d regroupant chacun un circuit intégré comportant une source de courant à capacités commutées, une résistance permettant le réglage du courant et les cinq diodes concernées, et comprend également un amplificateur opérationnel 32, deux résistances 33a,33b, une capacité de découplage 34 et une alimentation sous forme de pile 25.

Chaque circuit intégré est alimenté par une tension de 4,5 V, la tension de la pile 25 étant de 9 V.

L'amplificateur 32, qui est monté en *'suiveur',* c'est-à-dire pour lequel la tension d'entrée est égale à la tension de sortie, garantie la stabilité du point milieu 35 à 4,5 V et ne devra supporter que le courant de déséquilibre entre les entités de 5 diodes 31a,31b,31c,31d en série.

Bien entendu, la pile 25 peut être remplacée par une batterie rechargeable de 9V.

Enfin, le faisceau lumineux issu de la source lumineuse présente un spectre de longueur d'ondes comprise entre 380 et 520 nanomètres.

Le dispositif décrit précédemment permet de mettre en oeuvre un procédé de blanchiment des dents dans lequel un gel 36 contenant au moins un agent actif sensible à la lumière est appliqué sur les dents au moyen d'une seringue, d'un tube ou de tout autre applicateur répartissant ce gel 36 dans la gouttière 1 avant la mise en bouche de cette gouttière pour épouser la forme des arcades.

L'utilisation de la gouttière 1 permet notamment une répartition homogène du gel sur les dents 29,30 pendant la durée du traitement.

L'agent actif sensible à lumière peut être le peroxyde d'hydrogène bien connu pour ses propriétés d'agent blanchissant mais sera préférentiellement le peroxyde de carbamide qui présente une stabilité supérieure à celle du peroxyde d'hydrogène lorsqu'aucune source lumineuse ne lui est appliquée.

Par ailleurs, le gel peut contenir également du dioxyde de titane qui réagit en convertissant la lumière en ions négatifs qui se mélangent avec le milieu aqueux présent tel que le gel et agit ainsi comme un activateur supplémentaire de la réaction chimique se produisant.

Puis, le dispositif de l'invention est positionné de façon que la source lumineuse soit en position d'illumination des dents comme décrit précédemment selon que la plaque 14 est amovible ou non du boîtier 21 et/ou de la gouttière 1.

Selon le descriptif précédent, le boîtier 21 peut être facilement retiré puis replacé par desserrage puis resserrage des mâchoires de l'utilisateur, ce qui est très avantageux puisque lors d'une séance de blanchiment des dents de 45 minutes, ce boîtier 21 devra être retiré toutes les 5 à 10 minutes environ afin d'appliquer de nouveau le gel dans la gouttière 1 avant repositionnement sur les arcades.

Le dispositif de l'invention permet avantageusement de disposer la source lumineuse à environ 0,5 cm des dents ce qui autorise l'utilisation d'une puissance lumineuse plus faible et ainsi l'utilisation de composants plus légers.

Le maintien fixe du dispositif par l'utilisateur uniquement par l'action de serrage des mâchoires supérieure et inférieure en est ainsi rendu facile, cette facilité étant accentuée par l'utilisation de la gouttière 1 ajoutant à l'effort de serrage un effet d'adhésion sur la plaque 14 aidant au maintien de ce dispositif.

## Revendications

1. Dispositif pour le blanchiment des dents, **caractérisé en ce qu'**il comprend une source lumineuse (24) à laquelle est fixée au moins une pièce (14) qui assure le maintien de la source lumineuse (24) dans une position permettant l'illumination des dents par l'application d'une force de serrage des mâchoires de l'utilisateur sur la dite pièce de maintien (14) pendant la durée du traitement.

2. Dispositif selon la revendication 2, **caractérisé en ce qu'**il comporte en outre une gouttière (1) comprenant une partie supérieure (2) et une partie inférieure (3) qui sont faites chacune en un matériau plastique souple translucide ou transparent, cette gouttière (1) permettant de soulager l'exercice de serrage sur la pièce de maintien (14) et de maintenir uniformément réparti sur les dents à blanchir le gel qui est appliqué dans la dite gouttière (1).

3. Dispositif selon la revendication 3, **caractérisé en ce que** la gouttière (1) est faite en un matériau thermoformable de façon à épouser la forme des arcades supérieure et inférieure de l'utilisateur.

4. Dispositif selon l'une quelconque des revendications 2 et 3, **caractérisé en ce que** les parties supérieure (2) et inférieure (3) de la gouttière (1) sont soit indépendantes ou soit solidaires au niveau de leur extrémités respectives (2a,2b ;3a,3b).

5. Dispositif selon l'une quelconque des revendications précédentes, **caractérisé en ce que** l'élément de maintien de la source lumineuse (14) est une plaque rigide (14).

6. Dispositif selon l'une quelconque des revendications précédentes, **caractérisé en ce que** la pièce de maintien de la source lumineuse (14) est amoviblement ou inamoviblement fixé à la source lumineuse (24).

7. Dispositif selon l'une quelconque des revendications 2 à 6, **caractérisé en ce que** la pièce de maintien de la source lumineuse (14) est inamoviblement fixée à l'élément de maintien apparent des dents (1).

8. Dispositif selon l'une quelconque des revendications précédentes, **caractérisé en ce que** la pièce de maintien (14) comporte des moyens de blocage (15,16) aidant au positionnement fixe et reproductible de ladite pièce de maintien (14) pendant la durée du traitement.

9. Dispositif selon l'une quelconque des revendications précédentes, **caractérisé en ce que** la source lumineuse (24) comprend une pluralité de diodes électroluminescentes (24a,24b) disposées au niveau d'une surface concave (22) en direction des dents.

10. Dispositif selon la revendication 9, **caractérisé en ce qu'**il comprend une pluralités de diodes supérieures (24a) destinées à illuminer l'arcade supérieure et une pluralités de diodes inférieures (24b) destinées à illuminer l'arcade inférieure.

11. Dispositif selon la revendication 10,
**caractérisé en ce qu'**il comporte un groupe de dix diodes supérieures (24a) et un groupe de dix diodes inférieures (24b), chaque groupe de dix diodes (24a,24b) étant divisé en deux groupes de cinq diodes, quatre circuits intégrés pilotant le courant circulant respectivement dans chacun des groupes de cinq diodes et **en ce qu'**un accumulateur (25) ou une pile (25) alimente la pluralité de diodes (24,24a,24b).

12. Dispositif selon la revendication 11,
**caractérisé en ce qu'**au moins la pluralité de diodes (24,24a,24b) est disposée dans un boîtier (21) et **en ce qu'**au moins l'accumulateur (25) ou la pile (25) est disposé en dehors du boîtier (21) et relié à ce dernier par un cordon d'alimentation (27).

13. Dispositif selon l'une quelconque des revendications précédentes, dans lequel le faisceau lumineux issu de la source lumineuse (24) présente un spectre de longueur d'ondes comprise entre 380 et 520 nanomètres.

14. Procédé de blanchiment des dents comprenant au moins les étapes suivantes :
a) application d'un gel contenant un agent actif réagissant à la lumière sur les dents à blanchir (29,30), et
b) illumination des dites dents (29,30) avec le dispositif selon l'une quelconque des revendications 1 à 13.

15. Procédé selon la revendication 14, **caractérisé en ce qu'**il comporte en outre une étape d'application du gel dans les parties supérieure (2) et inférieure (3) de la gouttière (1) avant la mise en bouche de la dite gouttière (1).

16. Procédé selon l'une quelconque des revendications 14 et 15, dans lequel le gel comprend du peroxyde de carbamide.

17. Procédé selon l'une quelconque des revendications 14 à 16, **caractérisé en ce que** le gel comprend du dioxyde de titane.

18. Procédé selon l'une quelconque des revendications 15 à 17, dans lequel la source lumineuse (24) du dispositif selon l'une quelconque des revendications 1 à 12 est disposée à environ 0,5 cm des dents à blanchir (29,30), les lèvres reposant sur les faces supérieure (21a) et inférieure (21b) du dit dispositif.

19. Procédé selon l'une quelconque des revendications 15 à 18, **caractérisé en ce que** le gel est régulièrement appliqué sur les dents pendant le traitement.
